# EUROPEAN PATENT APPLICATION

(11) **EP 4 682 031 A1**
(43) Date of publication of application: **21.01.2026**
(21) Application number: 25189264.2
(22) Date of filing: 14.07.2025
(51) Int. Cl.: B62D 37/02, B62D 35/00

(54) **VEHICLE WITH A MORPHING BODYWORK**

(30) Priority: 15.07.2024 IT 202400016345
(71) Applicant: FERRARI S.p.A., 41100 Modena (IT)
(72) Inventor: SANCHEZ GOMEZ, Isaac Joaquin, 41100 MODENA (IT); BALLATORE, Marco, 41100 MODENA (IT); MERULLA, Andrea, 41100 MODENA (IT); PAOLINI, Andrea, 41100 MODENA (IT)
(74) Representative: Studio Torta S.p.A.

(57) **Abstract**

A vehicle (1; 101) with a bodywork (4) having a plurality of panels (5; 105); wherein one or more of said panels (5; 105) are morphing panels (10; 110) having an external covering (11) made of elastically deformable material.

## Description

### CROSS-REFERENCE TO RELATED APPLICATIONS

This patent application claims priority from Italian patent application no. 102024000016345 filed on July 15, 2024, the entire disclosure of which is incorporated herein by reference.

### TECHNICAL FIELD

The invention relates to a vehicle with an improved bodywork.

### PRIOR ART

It is known that a vehicle comprises a bodywork comprising, in turn, external covering panels, to which aerodynamic elements are fixed, which have the technical purpose of optimizing the performance of the vehicle. However, aesthetic needs often do not correspond to aerodynamic needs; for example, aerodynamically optimal elements may not be compatible with the desired aesthetic profile.

In order to reduce the impact of aerodynamic elements on the aesthetics of the bodywork, aerodynamic elements are installed, which can be moved and operated during the travel of the vehicle, according to specific technical needs. However, known movable aerodynamic elements, for example flaps, are discrete components separated from the other panels of the bodywork. In particular, known aerodynamic elements require the activation of complex kinematic mechanisms and the creation, along the bodywork, of openings that represent interruptions/breaks along the profile of the vehicle.

Furthermore, known aerodynamic elements are rigid bodies that can assume a limited number of operating configurations.

### DESCRIPTION OF THE INVENTION

The object of the invention is to provide a bodywork that overcomes the drawbacks described above.

According to the invention, there is provided a vehicle according to the appended claims.

The dependent claims define special embodiments of the invention.

### BRIEF DESCRIPTION OF THE DRAWINGS

Hereinafter, embodiments of the invention will be described, in order to allow the latter to be better understood, by way of non-limiting example and with reference to the accompanying drawings, wherein:
- figure 1 is a schematic view, with some parts removed for clarity, of a vehicle with a bodywork according to the invention;
- figure 2 shows a detail, in particular a morphing panel, of figure 1 in a different operating configuration;
- figures 3A, 3B, 3C show the detail of figure 2 in respective different operating configurations;
- figure 4 is a schematic view, with some parts removed for clarity, of the detail of figure 2;
- figure 5 shows, on a larger scale, the detail V of figure 4;
- figures 6, 7 and 8 are schematic views showing respective different actuators according to the invention;
- figure 9 shows, in a schematic manner and with some parts removed for greater clarity, of a variant of a vehicle with a bodywork according to the invention.

### EMBODIMENTS OF THE INVENTION

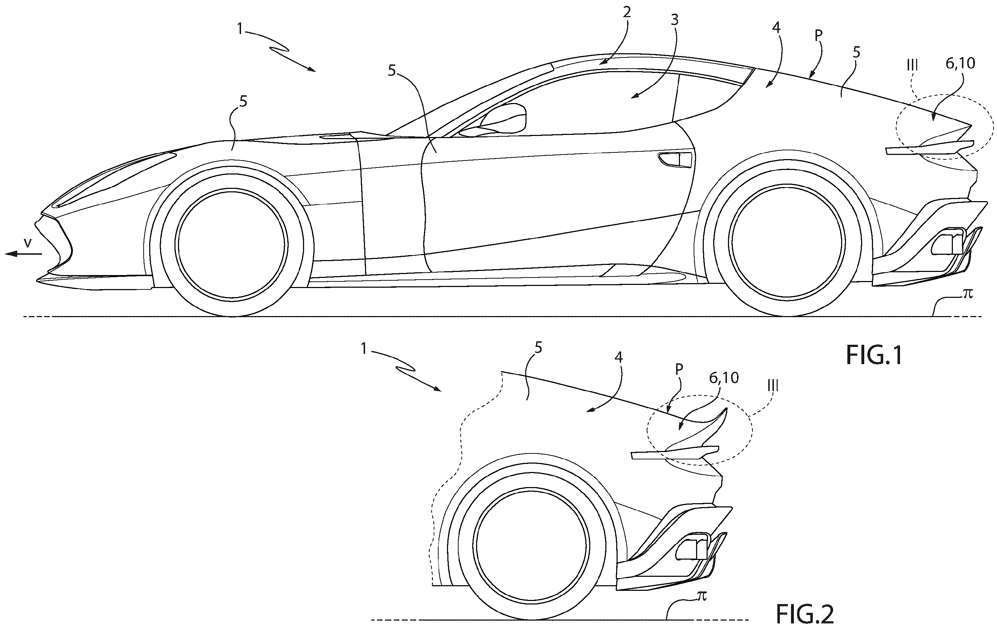

In figure 1, reference number 1 is used to indicate, as a whole, a vehicle comprising, in a known manner: a supporting structure 2 (for example, a body shell and/or a frame), which defines a cabin 3 configured to accommodate at least one driver and possibly one or more passengers; and a bodywork 4, which externally covers the supporting structure and is fixed, in a known manner that is not shown herein, to the supporting structure 2.

The vehicle 1 can rotate-translate, in a known manner, on a horizontal support plane π. The terms "front", "rear", "right", "left", "upper", "lower" and others similar to them are used with reference to the motor vehicle 1 moving on the support plane π in the forward direction v. The terms "external", "internal" and others similar to them are used with reference to the cabin accommodating the driver of the vehicle 1 while driving.

In a known manner, the bodywork 4 comprises, in turn, a plurality of external panels 5 suitably shaped to form the aerodynamic profile P (schematically shown in figure 1) and, as a whole, the aesthetic appearance of the vehicle 1.

The shape and dimensions of each panel 5 are variable. The panels 5 can be made of any material. By way of example but not limited to, the panels 5 can be made of: a composite material (for example, carbon fibre); and/or a metal material; and/or a crystal/glass; and/or a polymer material.

The term panel 5 refers to a body that covers a portion of the supporting structure 2. A panel 5 can be a laminar body. A panel 5 can be a thin body having a small thickness with respect to its width and/or height. Each panel 5 has an external surface s1, facing the outside of the motor vehicle 1, and an internal surface s2, which is configured to facilitate the fixing of the panel 5 to the supporting structure 2 and the housing of possible internal components of the motor vehicle 1.

The panels 5 of the bodywork 4 can be divided into:
- fixed panels, which are attached to the supporting structure 2 in a fixed manner (for example, a fixed panel can form: a nose, a tail, a fender, a roof, etc.);
- movable panels, which have one or more degrees of freedom with respect to the supporting structure 2 (for example, a movable panel can translate and/or rotate and/or rotate-translate with respect to the supporting structure 2. The movable panels can be of various types and shapes. For example, a movable panel can form: a door, an engine hood, a trunk, a fuel flap, an electric charging flap, an opening roof, etc.).

The movable and/or fixed panels 5 can also be used for the creation of aerodynamic elements 6. The aerodynamic elements 6 can be of various types, depending on their location. Some examples of aerodynamic elements 6 are: spoilers, side skirts, ailerons.

Advantageously, according to the invention, the bodywork 4 comprises one or more at least partially elastically deformable, stiff panels 5, hereinafter this type of panel 5 will be referred to as a morphing panel 10 to distinguish it from a panel 5 of the traditional type.

It should be pointed out that the term "stiff" refers to a body, even a thin one, which does not bend and/or stretch and/or compress, in other words remains undeformed, under the action of its own weight and/or under the action of given external forces.

Preferably, a panel 5 used for the creation of an aerodynamic element 6 is a morphing panel 10. Without loss of generality, even a movable or fixed panel 5 for the creation of any other part of the bodywork 4 (such as a door, the engine hood, the trunk, the fuel flap, the nose, the tail, ailerons, side skirts etc.) can be a morphing panel 10. In other words, the following teaches can be applied *mutatis mutandis* for the creation of a plurality of different types of morphing panels 10. The number and type of morphing panels 10 are variable. A spoiler 6 is described below by way of non-limiting example.

Figures 1 and 2 show a spoiler 6 made as a morphing panel 10 according to the invention, in respective different operating configurations.

Figure 1 shows the spoiler 6 in a lowered position, so as to reduce the aerodynamic drag; on the other hand, figure 2 shows the spoiler 6 in a lifted position, so as to increase the aerodynamic load.

Advantageously, the morphing panel 10 is a continuous body, which can elastically bend or stretch, when subjected to a given stress, and regain its original shape, when it is no longer subjected to the aforementioned given stress. The morphing panel 10 can form a continuous body with another adjacent panel 5.

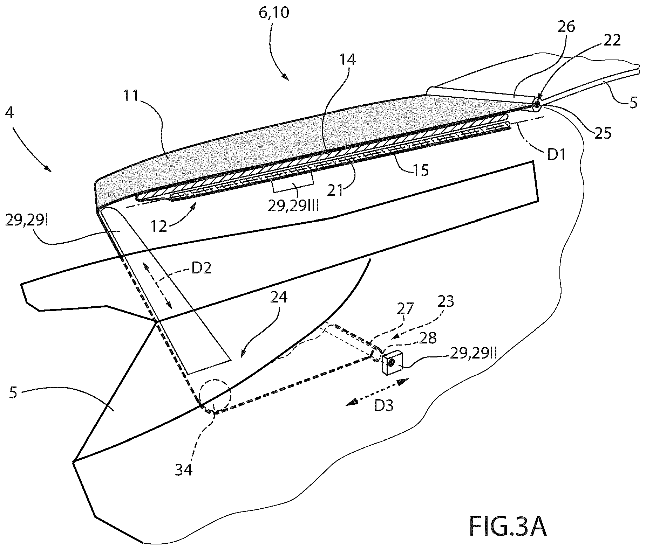

As shown in detail in figures 3A, 3B, 3C, 4 and 5, a morphing panel 10 comprises an at least partially elastic covering 11. The covering 11 is continuous and is fixed to one or more adjacent panels 5 of the bodywork 4 in a seamless manner; in other words, the morphing panel 10 is not a discrete body separated from the adjacent panels 5 by openings/windows or the like. According to a variant which is not shown herein, the morphing panel 10 can be at least partially detached from the adjacent panels 5.

Advantageously, the morphing panel 10 comprises a covering 11 made of a material at least partially capable of elastically deforming, i.e. capable of regaining the initial shape, after a deformation due to external stresses.

Preferably, the covering 11 is made of a material comprising elastomers. For example, the covering 11 is made of a material comprising both a composite material and elastomers. Alternatively, the covering 11 can be made of any material of choice within a group of elastically deformable materials. Advantageously, the covering 11 is capable of: stretching and/or compressing and/or bending under the action of a stress; and of regaining its initial shape once the stress is interrupted. In this way, advantageously, the covering 11 is capable of varying its shape and/or extension as a function of the stresses to which it is subjected. The covering 11 at least partly has a Young's modulus E ranging from 0.1 to 100 N/mm².

Advantageously, the morphing panel 10 comprises a stiffening structure 12, which is configured to confer flexural rigidity to the covering 11. The stiffening structure 12 forms a support base for the covering 11 and allows the covering 11 to support aerodynamic loads during the travel of the vehicle 1.

Advantageously, the morphing panel 10 further comprises an interaction unit 14 interposed between the covering 11 and the stiffening structure 12. The interaction unit 14 connects the covering 11 to the stiffening structure 12. As explained more in detail below, the interaction unit 14 is configured to distribute, preferably evenly, the aerodynamic load over the entire stiffening structure 12.

The shape and dimensions of the stiffening structure 12 define the external shape of the covering 11 when it is at rest. In other words, the shape and dimensions of the stiffening structure 12 substantially correspond (also considering the dimensions of the covering 11) to those of the morphing panel 10 at rest.

Advantageously, the shape and dimensions of the stiffening structure 12 are configured so as to obtain a given profile of the morphing panel 10, when the covering 11 is subjected to external stresses. According to the example shown in figures 1 to 4, the stiffening structure 12 is configured to assume a given concave shape (schematically shown in the figures) when the covering 11 is stretched, as explained more in detail below.

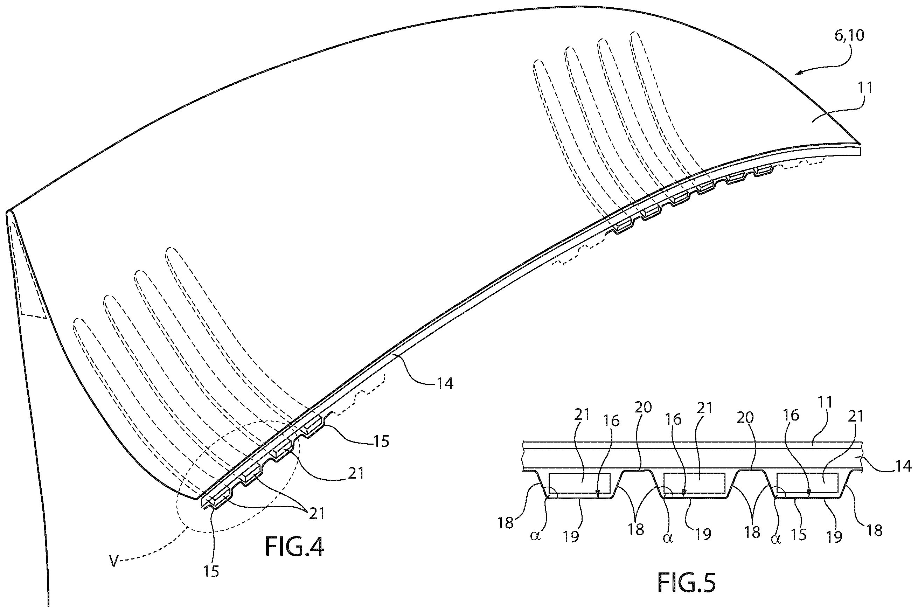

As shown in detail in figure 5, the stiffening structure 12 comprises, in turn, a body 15. The body 15 is suitably shaped according to given geometries. According to the example shown herein, the body 15 is corrugated and has a plurality of U-shaped housings 16 joined to one another. The housings 16 extend along a direction D1 (figure 3A). With reference to figure 5, each U-shaped housing 16 is delimited by two adjacent side walls 18 connected to one another at the lower end by a bottom wall 19. Two adjacent housings 16 are connected to one another at an upper end by means of an upper wall 20. The bottom 19 and the side walls 18 are inclined relative to one another at an angle α. For example, the body 15 can be made of the same material as the covering 11 and the body 15 is directly connected, in particular is manufactured as one single piece, with the covering 11.

Advantageously, the body 15 has a bending stiffness such as to support, in use, given aerodynamic loads.

Advantageously, the succession of housings 16 parallel to one another allows the possibility of deforming the body 15 transversely and/or longitudinally to the direction D1, so as to be able to: lengthen or shorten and/or widen or narrow the body 15 under given conditions of use.

The shape and dimensions of each housing 16 are variable. The housings 16 can be different from one another. In particular, the housings 16 can have different extensions and/or inclinations with respect to the direction D1. According to a variant which is not shown herein, the body 15 has a plurality of housings 16 that extend along several directions that are different from one another. For example, the body 15 can have housings 16 that extend along directions that are transverse to one another.

According to the example shown in figures 4 and 5, the body 15 is fixed to the covering 11 along the outer edges, whereas, on the inside, the interaction unit 14 is interposed between the upper wall 20 and the covering 11. According to a variant which is not shown herein, the body 15 is connected to the covering 11 also in the area of the upper wall 20, namely the interaction unit 14 is not interposed between the upper wall 20 and the covering 11.

The stiffening structure 12 further comprises a plurality of stiff elements, in particular slats 21. The slats 21 are not deformable due to pulling/compression. The slats 21 are thin bodies having a given bending stiffness. For example, the slats 21 are made of fibreglass.

In use, each slat 21 is inserted in a respective housing 16 of the body 15. The shape and dimensions of each slat 21 are a function of the shape and dimensions of the respective housing 16. Each slat 21 and the respective housing 16 are at least partially mutually movable, so that they can translate relative to one another, in particular along the direction D1. Advantageously, each slat 21 is constrained to the stiffening structure 12 and/or to the covering 11 so that it is always arranged according to a given aerodynamic profile.

Advantageously, each slat 21 is configured so as to form a shape coupling with the respective housing 16. In other words, each slat 21 and the respective housing 16 are configured so as to guide the expansion or contraction of a respective portion of the body 15. Preferably, each housing 16 is configured to form a reversible interlocking with the outline of the respective slat 21 that slides inside it, so as to facilitate, following an expansion or contraction, the return to a given position.

The interaction unit 14 is interposed between each slat 21 and the covering 11.

In the event that the body 15 forms one single body with the covering 11 (a solution that is not shown herein), the interaction unit 14 comprises a plurality of separate sub-units, each interposed between a respective slat 21 and the covering 11.

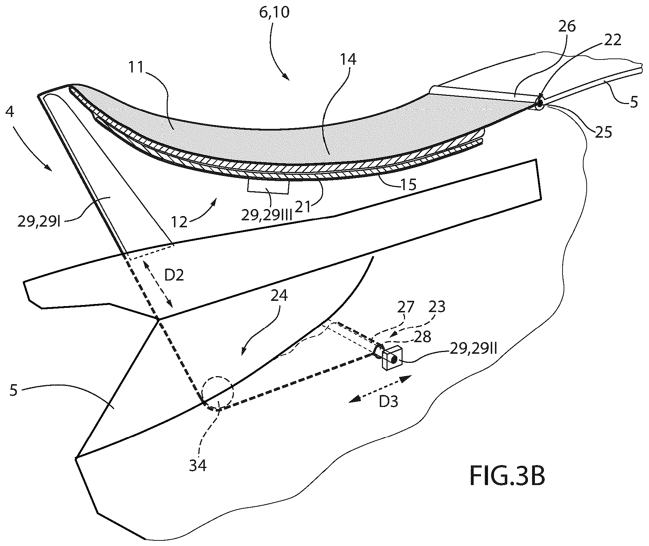

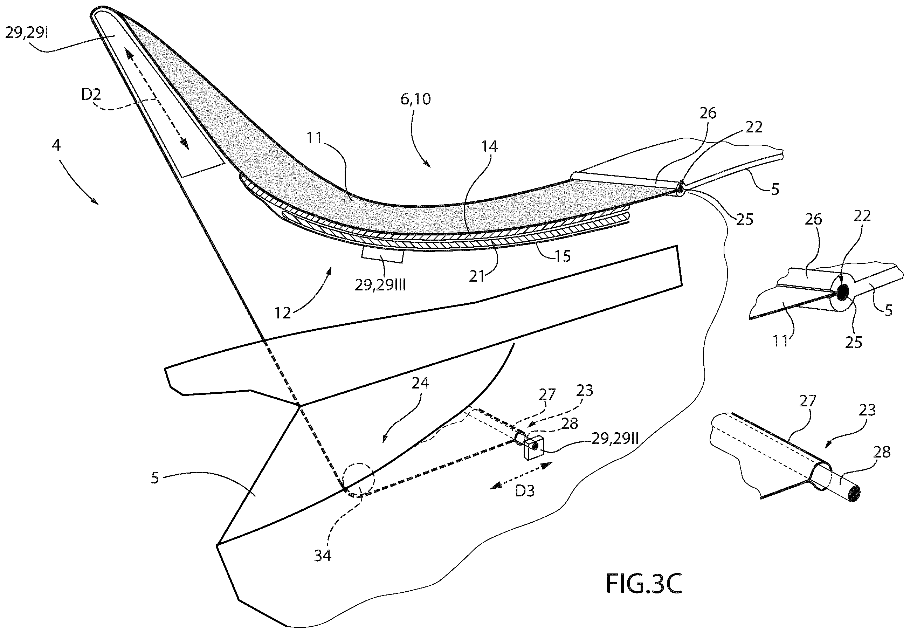

As shown in figures 3A, 3B, 3C, the covering 11 is at least partially held under tension around the stiffening structure 12. In particular, the covering 11 has a fixed edge 22, which is fixed to a panel 5 of the bodywork 4, and a movable edge 23, which is connected to a tensioning system 24, as explained more in detail below.

The ways in which a (fixed or movable) edge 22, 23 of the covering 11 is connected to the bodywork 4 are variable. Figures 3A, 3B, 3C show, by way of non-limiting example, two examples of connection between the covering 11 and the bodywork 4:
- the covering 11 has an edge 25 (in the example with a circular section), which is inserted, in use, in a guide 26 of a panel 5;
- the covering 11 forms a loop 27 along the fixed edge 23 and a rod 28 is inserted inside the loop 23, by moving the bar 28 it is possible to tension or release the covering 11.

Advantageously, the tensioning system 24 is housed inside the bodywork 4 and is not visible from the outside. The tensioning system 24 can be housed entirely, or only partially, inside the internal volume delimited by the covering 11.

The tensioning system 24 can be of various types. In particular, the tensioning system 24 comprises one or more actuators 29, each configured to deform, in a selective and determined manner, at least part of the covering 11.

In particular, according to the example shown in figures 3A, 3B, 3C, the tensioning system 24 comprises:
- an actuator 29I, which engages an intermediate portion of the covering 11, in particular outside the stiffening structure 12;
- an actuator 29II, which engages the movable edge 23 of the covering 11;
- an actuator 29III, which is fixed to the body 15.

The tensioning system further comprises a return system 34 (schematically shown).

According to the example shown herein, the covering 11 is fixed along the fixed edge 22 to a panel 5, whereas the movable edge 23 is fixed to the actuator 29II arranged inside the bodywork 4. The covering 11 is held taut around the stiffening structure 12, the actuator 29I and the return system 34.

Each actuator 29 can be chosen from a group of actuators that are different in terms of type. Without loss of generality, an actuator 29 can be operated by means of:
- fluid (e.g. pneumatically or hydraulically); and/or
- mechanically (e.g. mechanical kinematic mechanisms); and/or
- electromagnetism and/or magnetism (e.g. piezoelectric, capacitive, electromagnetic, magnetic actuators) ;
- intrinsic properties of the materials used (e.g. shape memory materials); and/or
- temperature (e.g. thermal expansion or shrinkage).

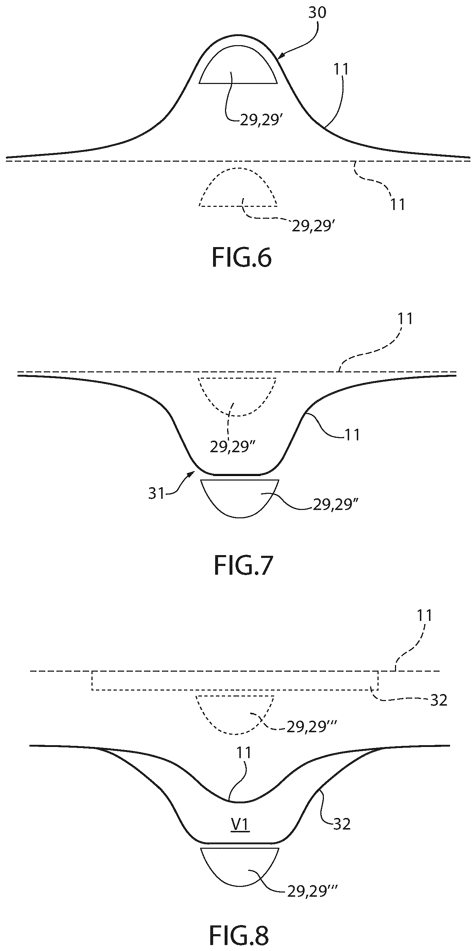

Figures 6, 7, 8 show, in a schematic manner and with some parts removed for greater clarity, possible operating principles of a generic actuator 29. In particular, it should be pointed out that, in figures 6, 7, 8, the covering 11 and an actuator 29 are represented with a broken line when they are in a rest position; and with a solid line when they are in a work position.

According to the example shown in figure 6, the actuator 29' pushes a respective portion of the covering 11, forming an outward-convex curve 30, relative to the initial position, thereby increasing the internal volume of the covering 11.

According to the example shown in figure 7, the actuator 29" pulls, in particular sucks, the covering 11, forming an outward-concave curve 31, relative to the initial position, thereby reducing the internal volume of the covering 11.

According to the example shown in figure 8, the actuator 29''' does not interact directly with the covering 11, but with an intermediate body 32, which is fixed, in turn, to the covering 11. The actuator 29‴ pulls, in particular sucks, the intermediate body 32, which deforms and causes, in turn, the deformation of the covering 11. The actuator 29''' makes it possible to obtain curves with greater fillet radii compared to the solution described in figure 7.

Preferably, the intermediate body 32 delimits with the covering 11 a hermetically sealed volume V1. The volume V1 is filled with a fluid, which can be gaseous or liquid. In use, the deformation of the intermediate body 32 causes an expansion of the volume V1 and, consequently, a reduction in the pressure inside the volume V1, which sucks the covering 11 towards the inside.

According to a variant which is not shown herein, the intermediate body 32 can also be used in addition to or as a replacement for a stiffening structure 12; in other words, the intermediate body 32 and the volume V1 and the type of fluid contained within the volume V1 can be configured so as to also perform the stiffening and guiding function for a covering 11. By way of non-limiting example, it is possible to provide, for a same covering 11, a plurality of intermediate bodies 32 applied in respective different zones to form fluid-filled volumes V1. In this way, advantageously, a plurality of different zones of the covering 11 can be deformed independently of one another and, consequently, the variety of final configurations obtainable can be increased. The number, the shape and the size of the intermediate bodies 32 applicable to a covering 11 are variable. For example, a matrix-like structure affecting an extended surface of a covering 11 can be obtained with a plurality of intermediate bodies 32.

The types of actuators 29 described herein are for explanatory and non-limiting purposes only.

With reference to the example shown in figures 3A, 3B, 3C, the actuator 29I is of the type 29' and can translate along a direction D2 transverse to the direction D1 of the stiffening structure 12. The actuator 29I pushes a respective portion of the covering 11 so as to bend and stretch it and form an upwardly elongated curve, as explained more in detail below.

With reference to the example shown in figures 3A, 3B, 3C, the actuator 29II is of the type 29'' and can translate along a direction D3 transverse to the direction D2. The actuator 29II pulls a respective portion, in particular the movable edge 23, of the covering 11 so as to hold the covering 11 taut and avoid the formation of folds and bubbles. In other words, the actuator 29II is a tie rod that changes its position as a function of the position of the actuator 29I, so that at least the portion of the covering 11 exposed outside the bodywork 4, in particular the portion above the stiffening structure 12, is taut.

With reference to the example shown in figures 3A, 3B, 3C, the actuator 29III is of the type 29‴ and pulls the body 15 inwards, which can be considered conceptually similar to the intermediate body 32. This solution advantageously makes it possible to obtain a bending of the covering 11 without the formation of sharp curves/folds.

Figures 3A, 3B, 3C schematically show, with some parts removed for greater clarity, a tensioning system 24 in some possible arrangements. The morphing panel 10 can vary its shape in a continuous manner; in other words, the morphing panel 10 can assume a plurality of configurations other than the ones shown herein. In particular, in figures 3A, 3B, 3C the morphing panel 10 is shown in the following arrangements: completely at rest (figure 3A); in a state of intermediate deformation (figure 3B); completely deformed (figure 3C).

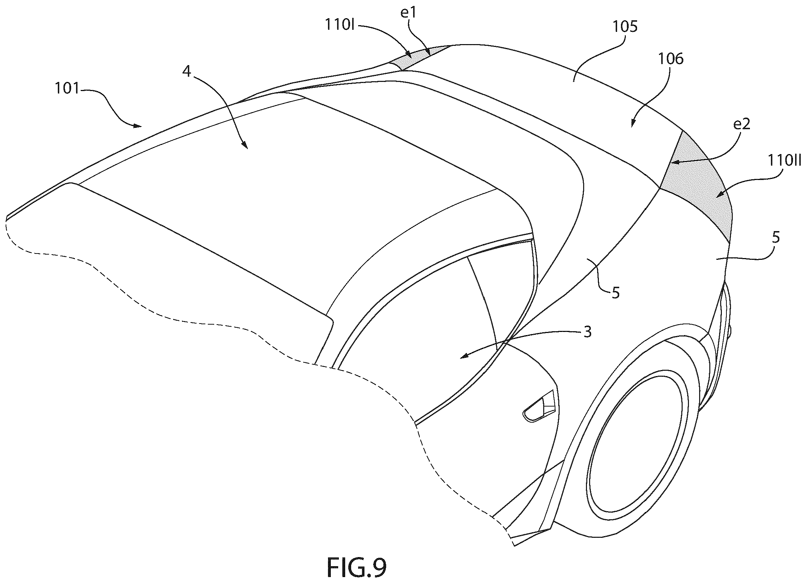

In figure 9, number 101 indicates a variant of a vehicle according to the invention. In figure 9 and hereinafter, the components shared with the vehicle 1 maintain the same reference numbers and are to be considered as included in the vehicle 101, without repeating them for the sake of brevity. In particular, the vehicle 101 differs from the vehicle 1 in that the spoiler 106 comprises a panel 105 hinged to the rest of the bodywork 4. The panel 105 of the spoiler 106 can rotate around a hinge axis H1. The bodywork 4 further comprises two morphing panels identified below with 110I and 110II (highlighted in grey). Each morphing panel 110 protrudes from a respective end e1, e2 of the panel 105 and joins the respective end e1, e2 to the rest of the bodywork 4. In particular, each morphing panel 110I, 110II:
- bends and expands when the spoiler 106 is lifted; and
- shrinks when the spoiler 106 is lowered.

The operation of a morphing panel 10 according to the invention is described below. It should be pointed out that the order of description is only for disclosure purposes and that the sequences of operations described below can be carried out in a different order, or even at least partially simultaneously.

In use, the morphing panel 10 and the tensioning system 24 are in the rest position (figure 3A), in which the morphing panel 10 is subjected only to the force of its own weight and to the aerodynamic load during the travel of the vehicle 1. In the rest position, the morphing panel 10 is rigidly arranged so as to define a respective component of the bodywork 4 (in the case shown herein, the spoiler 6).

When the tensioning system 24 is activated, it exerts forces such as to allow for the at least partial deformation of the morphing panel 10. In other words, by being activated, the tensioning system 24 modifies the geometry of the morphing panel 10.

According to figure 3B, the actuator 29I pushes a respective portion of the covering 11 upwards and the stiffening structure 12 bends and arches. The stiffening structure 12 can only deform due to the action of the pull exerted by the covering 11 or also due to the action of further actuators. For example, by moving the actuator 29III so as to pull the body 15 towards the inside of the bodywork 4, the bending of both the body 15 and the covering 11 is generated. Without loss of generality, the stiffening structure 12 can be bent by using other types of actuators (not shown).

Advantageously, according to figure 3C, the actuator 29I is configured to protrude past the stiffening structure 12 so as to also act as a resisting support for a respective portion of the covering 11.

Figures 3A and 3C schematically show two end positions that can be reached by the covering 11; without loss of generality, the covering 11 can continuously assume any intermediate position between the two end positions shown herein.

Similarly to what described above, according to the solution shown in figure 9, when the spoiler 106 is lifted, the morphing panels 110I, 110II expand. Each morphing panel 110i, 110II guarantees the connection, in a seamless manner, between a respective end of the spoiler 106 and the bodywork 4.

Advantageously, as a result of what disclosed above, the morphing panel 10 is a smooth and continuous surface. By so doing, a continuous profile P of the bodywork 4 is guaranteed. Furthermore, advantageously, the morphing panel 10 makes it possible to vary the profile P according to the needs. Therefore, advantageously, the solution disclosed above makes it possible to adapt the profile P to the needs of use (figure 1 shows a configuration with minimum aerodynamic drag and figure 2 shows a configuration with the maximum aerodynamic load).

Advantageously, the morphing panel 10 according to the invention can vary in shape in a continuous fashion and assume a multitude of different operating configurations, in far greater numbers than traditional solutions equipped with rigid aerodynamic elements.

## Claims

1. A bodywork for a vehicle (1; 101) comprising a plurality of panels (5; 105) configured to cover a supporting structure (2) of the vehicle (1; 101); the bodywork (4) being **characterized in that** one or more of said panels (5; 105) are morphing panels (10; 110); wherein, each morphing panel (10; 110) comprises an external covering (11) made of elastically deformable material.

2. A bodywork according to claim 1 and comprising a stiffening structure (12; 32), which is at least partially covered externally by said covering (11); wherein the stiffening structure (12; 32) is configured to act, at least partially, as support for the covering (11) to confer, in use, flexural rigidity to the covering (11) itself.

3. A bodywork according to any of the preceding claims, wherein the stiffening structure (12) comprises, in turn, a body (15) having a plurality of housings (16), each of which extends along a respective direction; wherein, said housings (16) can extend along the same direction or along directions different from one another.

4. A bodywork according to claim 3, wherein said housings (16) are configured to permit a deformation of the body (15) transversely and/or longitudinally to a first direction (D1); wherein said housings (16) are configured to permit a bending of the body (15) itself with respect to an axis transversal to a first direction (D1).

5. A bodywork according to claim 3 or 4, wherein the body (15) is made of the same material of the covering (11).

6. A bodywork according to any of the preceding claims, wherein the stiffening structure (12) comprises a plurality of stiff elements (21), in particular slats; wherein said stiff elements (21) are thin bodies having a determined bending stiffness.

7. A bodywork according to any claim from 3 to 6, wherein each housing (16) of said body (15) is configured to form a shape coupling, in particular a reversible interlocking, with the profile of a respective slat (21) so as to guide a respective portion of the body (15) to a determined position; in particular, to guide the return to a determined position, following an expansion.

8. A bodywork according to any preceding claim and comprising an interaction unit (14) which is interposed between the covering (11) and the stiffening structure (12); wherein the interaction unit (14) is configured to distribute, in use, on the stiffening structure (12) the aerodynamic loads acting on the covering (11).

9. A bodywork according to any claim from 2 to 8, wherein the stiffening structure (32) delimits with the covering (11) a volume (V1) hermetically sealed; in particular, said volume (V1) is filled with a fluid.

10. A bodywork according to any claim from 2 to 9, wherein the stiffening structure (32) is a laminar body made of the same material of the covering (11).

11. A bodywork according to any preceding claim and comprising a tensioning system (24) which is configured to deform, in a selective and determined manner, at least a portion of the covering (11).

12. A bodywork according to claim 11, wherein said tensioning system (24) comprises one or more actuators (29) each of which is configured to pull or push a respective portion of the covering (11) and/or of the stiffening structure (12).

13. A vehicle comprising a supporting structure (2) and a bodywork (4) which is configured to cover externally said supporting structure (2); the vehicle (1; 101) being **characterized in that** the bodywork (4) comprises a plurality of panels (5; 105); wherein one or more of said panels (5; 105) are morphing panels (10; 110) according to any preceding claim.

14. A vehicle according to claim 13, wherein said bodywork (4) comprises one or more aerodynamic elements (6; 106), in particular spoilers and/or ailerons and/or skirts, each of which is made up of a respective morphing panel (10; 110).
